# EUROPÄISCHE PATENTSCHRIFT

(11) **EP 3 825 163 B1**
(45) Veröffentlichungstag und Bekanntmachung des Hinweises auf die Patenterteilung: **03.12.2025**
(21) Anmeldenummer: 20199494.4
(22) Anmeldetag: 01.10.2020
(51) Int. Cl.: B60L 53/12, B60L 53/30, B60L 53/36, B65G 1/04, B66F 9/06, B66F 9/07, B66F 9/075, B66F 9/24, B65G 63/00, B66B 9/00

(54) **LAGER MIT MINDESTENS EINER REGALEINRICHTUNG**
STORAGE WITH AT LEAST ONE SHELF DEVICE
ENTREPÔT POURVU D'AU MOINS UN AGENCEMENT DE RAYONNAGE

(30) Priorität: 20.11.2019 DE 102019131365
(43) Veröffentlichungstag der Anmeldung: 26.05.2021
(73) Patentinhaber: Jungheinrich Aktiengesellschaft, 22047 Hamburg (DE)
(72) Erfinder: Petersen, Marinus, 24536 Neumünster (DE)
(74) Vertreter: Hauck Patent- und Rechtsanwälte PartmbB

(56) Entgegenhaltungen:
- WO-A1-2005/002998
- WO-A1-2011/089063
- WO-A1-2012/083062
- WO-A1-2016/137540
- DE-A1- 102009 007 954
- DE-A1- 102015 122 902
- US-A1- 2007 065 258

## Beschreibung

Die vorliegende Erfindung betrifft ein Lager mit mindestens einer Regaleinrichtung, hierbei kann es sich beispielsweise um ein Hochregallager handeln, das mit Hilfe eines oder mehrerer Flurförderzeuge bewirtschaftet wird.

Grundsätzlich ist aus dem Stand der Technik bekannt, Flurförderzeuge induktiv zu laden. Dabei wir das Flurförderzeug über oder neben einer Ladevorrichtung abgestellt, die induktiv Energie an eine entsprechende Ladevorrichtung des Flurförderzeugs übertragen kann. Die induktive Übertragung funktioniert hierbei über Primär- und Sekundärspulen, die über einen Luftspalt hinweg elektromagnetisch gekoppelt sind. Der Vorteil des induktiven Ladens von Flurförderzeugen besteht darin, dass nicht länger ein kabelgebundenes Ladegerät eingesetzt werden muss, wodurch der Ladevorgang vereinfacht wird.

Aus WO 2016/137540 A1 ist ein Lademittel bekannt, bei dem ein an einem Mast verschieblicher Empfänger zur Höhenanpassung auf einer ortsfesten Klammer aufliegt.

Aus WO 2011(089063 A1 ist ein Hochregallager bekannt, bei dem induktive Aufladepunkte im Kopfbereich eines Übergabelagers vorgesehen sind. Ein Gangwagen, der in dieser Position vor dem Übergabelager geparkt ist, kann auf diese Weise an dem Aufladepunkt während der Wartezeit aufgeladen werden.

Aus WO 2016/014181 A1 ist bekannt, für Automobile Fahrspuren auf der Straße mit Ladevorrichtungen zum induktiven Laden während der Fahrt auszurichten. Beispielsweise kann ein Sensor vorgesehen sein, der ein heranfahrendes Automobil erkennt und entsprechend entlang der Fahrtrichtung des Autos angeordnete Ladespulen ansteuert.

US 6,421,600 B1 betrifft vollelektrische Personenkraftwagen, die induktiv über in der Straße vorgesehene Lademittel geladen werden können. Zur Verbesserung des Ladevorgangs ist vorgesehen, ungefähr 10% der Straße mit elektrischen Lademitteln auszustatten, wobei hierzu elektrische Lademittel besonders im Bereich von Kreuzungen und Ampeln vorgesehen werden.

Aus DE 10 2017 107 309 A1 ist ein Energiemanagement für ein Container-Terminal bekannt, bei dem elektrifizierte Krane für das Handling der Container eingesetzt werden. Die Krane operieren unabhängig voneinander, so dass bei deren gleichzeitigen Betrieb Netzspannungen und Rückwirkungen für das Netz auftreten können. Es wird daher vorgeschlagen, einen Energiespeicher für die elektrischen Krane vorzusehen, der mit günstigem Strom geladen wird und Netzspannungsschwankungen verhindert.

Aus DE 102009007954 A1 ist ein Fahrzeug mit einem Hubwerk bekannt geworden, dass in bestimmten räumlichen Bereichen induktiv geladen werden und das mit dem Hubwerk freiwerdende potentielle Energie speichern kann.

Aus US2007065258A1 ist ein Materialtransportsystem für mehrstöckige Lagerhäuser, auf Seeschiffen und dergleichen bekannt geworden. Güter werden automatisch zu und von den Lagerbereichen und zwischen den verschiedenen Ebenen durch selbstfahrende Lastentransportfahrzeuge befördert. Die Lastentransportfahrzeuge bewegen sich über die Oberfläche der verschiedenen Ebenen und können auch aus eigener Kraft in offenen vertikalen Schächten zwischen den Ebenen bewegt werden, um so Waren in jeden gewünschten Bereich innerhalb des Systems, des Lagers oder des Schiffes zu transportieren. Die Fahrzeuge können über ein berührungsloses induktives Energieübertragungssystem mit Strom versorgt werden.

Im Bereich der Logistik besteht das Bedürfnis, Lager mit Regaleinheiten bereitzustellen, die für induktiv ladbare Flurförderzeuge einen effektiven Betrieb gewährleisten.

Erfindungsgemäß wird die Aufgabe durch ein Lager mit den Merkmalen von Anspruch 1 gelöst. Vorteilhafte Ausgestaltungen bilden die Gegenstände der Unteransprüche.

Das erfindungsgemäße Lager ist mit mindestens einer Regaleinrichtung ausgestattet, in die mit einem Flurförderzeug Lasten eingelagert und aus der mit dem Flurförderzeug Lasten ausgelagert werden können. Bei der Regaleinrichtung kann es sich beispielsweise um ein Hochregallager handeln. Das erfindungsgemäße Lager besitzt zudem einen entlang der Regaleinrichtung verlaufenden Gang. Erfindungsgemäß ist ein untergrundfestes induktives Lademittel für das Flurförderzeug in dem Gang vorgesehen. Das induktive Lademittel ist vorgesehen, um ein sich in der Nähe des Lademittels befindliches Flurförderzeug induktiv zu laden. Das induktive Lademittel besitzt an seiner zu der Regaleinrichtung weisenden Seite einen ersten Abstand und seiner von der Regaleinrichtung fortweisenden Seite einen zweiten Abstand zu der Regaleinrichtung. Die Differenz dieser beiden Abstände bildet dabei die Quererstreckung des induktiven Lademittels. Erfindungsgemäß ist der erste Abstand so bemessen, dass das Flurförderzeug bei einem Ein- und Auslagervorgang induktiv geladen werden kann. Bei einem Ein- und Ausladevorgang fährt das Flurförderzeug
nah an die Regaleinrichtung heran, um die Last aus dem Lager herausnehmen zu können oder in dieser absetzen zu können. Das induktive Lademittel erstreckt sich nun so nah an die Regaleinrichtung heran, dass das Flurförderzeug auch bei seinen Lagervorgängen noch induktiv geladen werden kann.

Der zweite Abstand ist erfindungsgemäß so bemessen, dass das Flurförderzeug auch bei einem Hebe- und Senkvorgang induktiv geladen werden kann. Bei dem Hebe- und Senkvorgang besitzt das Flurförderzeug einen Abstand zur Regaleinrichtung. Dieser Abstand erlaubt es, die aus der Regaleinheit entnommene Last abzusenken oder eine in die Regaleinheit einzulagernde Last anzuheben. Die erfindungsgemäße Dimensionierung des induktiven Lademittels relativ zu der Regaleinrichtung erlaubt es somit, das Flurförderzeug sowohl bei Ein- und Auslagervorgängen induktiv zu laden als auch während der Zeit, in der die Last angehoben und abgesenkt wird, das Flurförderzeug induktiv zu laden. Das mit einem solchen induktiven Lademittel ausgestattete Lager besitzt eine große Anzahl von technischen Vorteilen. Zunächst kann auf eine an sich bekannte stationäre induktive Ladetechnik zurückgegriffen werden, wobei das eingesetzte induktive Lademittel dabei entsprechend dimensioniert werden muss, um einen Ladevorgang sowohl während des Ein- und Auslagerns als auch während des Hebens und Senkens vor der Regaleinrichtung sicherzustellen. Zudem kann der hohe Wirkungsgrad des induktiven Ladevorgangs auch hier genutzt werden. Weiterhin erweist es sich als sehr vorteilhaft, dass der Ladevorgang auch gerade während der Hubvorgänge erfolgt. Hierbei wird das Flurförderzeug elektrisch stark belastet, so dass eine zusätzliche Energieversorgung über den induktiven Ladevorgang hier sehr vorteilhaft ist.

In einer bevorzugten Weiterbildung des erfindungsgemäßen Lagers sind zwei Lagereinrichtungen vorgesehen, die einander gegenüberliegend den Gang begrenzen, wobei das Lademittel mit seiner zu einer ersten Regaleinrichtung weisenden Seite den ersten Abstand und mit seiner zu der zweiten Regaleinrichtung weisenden Seite einen dritten Abstand aufweist. Der dritte Abstand ist dabei so bemessen, dass das Flurförderzeug bei einem Ein- und Auslagervorgang in die zweite Regaleinrichtung induktiv geladen werden kann, wobei der erste Abstand so klein bemessen ist, dass das Flurförderzeug bei einem Hebe- und Senkvorgang vor der zweiten Regaleinrichtung induktiv geladen werden kann. Bei den vorstehend definierten Abständen ergibt sich die Gangbreite zwischen erster und zweiter Regaleinrichtung als die Summe aus zweitem und drittem Abstand. Grundsätzlich müssen erster und dritter Abstand nicht gleich groß sein, bevorzugt können diese jedoch bei im Wesentlichen gleich aufgebauten Regaleinrichtungen auch gleiche Abmessungen besitzen, so dass das Lademittel mittig zwischen den Regaleinrichtungen angeordnet werden kann.

In einer weiter fortgebildeten Ausgestaltung besitzt das Lager entlang eines Ganges eine Vielzahl von induktiven Lademitteln. Die Lademittel sind dabei bevorzugt so in dem Gang verteilt, dass diese entlang der Längsrichtung des Ganges einzelnen Stellbereichen der Regaleinrichtung zugeordnet sind. Dabei ist es nicht erforderlich, dass jedem Stellbereich im Lager auch notwendig ein induktives Lademittel zugeordnet ist.

In einer bevorzugten Weiterbildung wird die Vielzahl der induktiven Lademittel in einem Gang von einem Wechselrichter gemeinsam gespeist. Dies bedeutet, in dem Lager ist bevorzugt ein Wechselrichter pro Gang vorgesehen, wobei der Gang mehrere in Längsrichtung des Ganges hintereinander angeordnete induktive Lademittel aufweist. Bevorzugt wird eines der induktiven Lademittel von dem Wechselrichter zum Laden eines auf dem induktiven Lademittel sich befindenden Flurförderzeugs angesteuert.

Das erfindungsgemäße Lager weist mehrere Gänge auf, die jeweils eine Vielzahl von induktiven Lademitteln mit einem Wechselrichter aufweisen. Es befinden sich also mehrere Wechselrichter in dem Lager. Bevorzugt werden die mehreren Wechselrichter von einem gemeinsamen Netzumrichter gespeist, der über einen Netzanschluss mit dem elektrischen Versorgungsnetz verbunden ist.

In einer bevorzugten Ausgestaltung sind in dem Gang das oder die induktiven Lademittel jeweils einem Lagerplatz zugeordnet. Ein Lagerplatz ist hierbei ein zum Ein- und Ausladen von Lasten vorgesehener Bereich der Regaleinrichtung.

In einer bevorzugten Ausgestaltung ist eine übergeordnete Steuerung für die Lagerplätze vorgesehen, die dazu ausgebildet ist, einen mit einem induktiven Lademittel ausgestatteten Lagerplatz stärker zu frequentieren als einen nicht mit einem induktiven Lademittel ausgebildeten Lagerplatz. Die übergeordnete Steuerung, beispielsweise ein Waren-Management-System, ist vorgesehen, um den eingelagerten Waren und Gütern in der Regaleinrichtung einen Platz zuzuweisen. Dabei ist die übergeordnete Steuerung bevorzugt derart ausgebildet, dass die Plätze nicht gleichmäßig über die Regaleinrichtung verteilt sind, sondern stärker frequentierte Lagerplätze geschaffen werden, an denen sich die in dem Lager eingesetzten Flurförderzeuge häufig befinden, um Waren ein- und auszulagern. Als solche Lagerplätze werden bevorzugt Lagerplätze mit induktiven Lademitteln ausgewählt. Bevorzugt sind in Ganglängsrichtung Bereiche zwischen Lagerplätzen frei von induktiven Lademitteln.

In einer bevorzugten Weiterbildung des Lagers ist mindestens ein Flurförderzeug mit einem induktiven Lademittel vorgesehen, das ausgebildet ist, um auch während des Betriebs die Batterie induktiv zu laden.

Die Erfindung wird an dem nachfolgenden Ausführungsbeispiel näher erläutert. Es zeigen:
- Fign. 1a - d: die Arbeitsweise eines Flurförderzeugs in einem beidseitig durch Regale begrenzten Gang,
- Fign. 2a - b: induktive Lademittel für den Gang sowie für das Flurförderzeug und deren Wirkweise,
- Fig. 3: eine Draufsicht auf ein Hochregallager mit entsprechenden Bodenspulen im Gang und
- Fig. 4: eine Gesamtansicht eines Lagers mit mehreren Gängen und Wechselrichter.

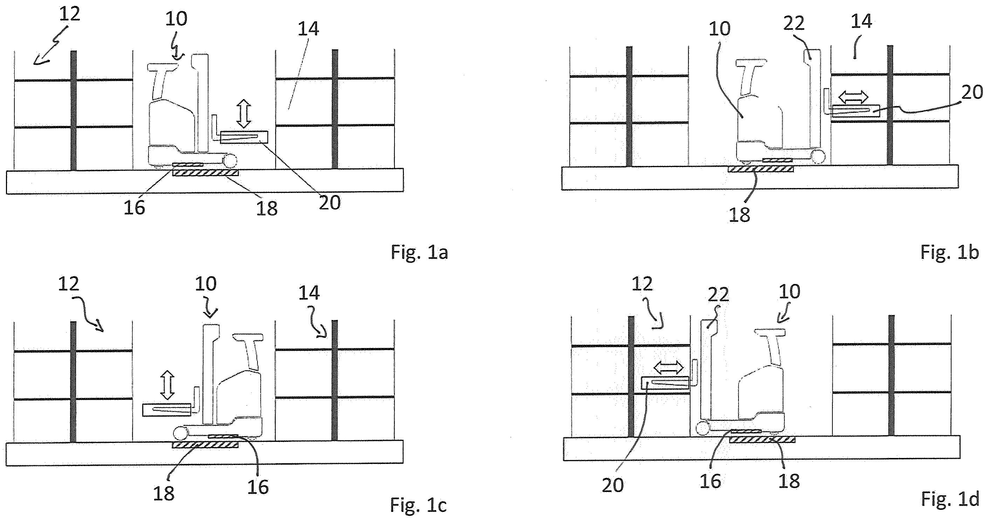

Die Fign. 1a - d zeigen einen Schubmaststapler 10, der zwischen einem ersten Hochregallager 12 und einem zweiten Hochregallager 14 operiert. Der Schubmaststapler 10 steht in dem Ausführungsbeispiel stellvertretend für ein Flurförderzeug, das beispielsweise für einen Hochhub ausgebildet ist. Der Schubmaststapler 10 besitzt auf seiner Unterseite ein induktives Lademittel 16, das mit einem untergrundfesten induktiven Lademittel 18 zusammenwirkt. Fig. 1a zeigt eine Situation, in der das Flurförderzeug 10 eine Palette 20 vor der Regaleinrichtung 14 anhebt oder senkt. Fig. 1b zeigt eine Situation, in der das Flurförderzeug 10 näher an die zweite Regaleinrichtung 14 herangefahren ist. Zudem ist der Schubmast 22 in seiner maximal vorgeschobenen Position. Fig. 1b zeigt, wie die Palette 20 in das Hochregallager 14 eingelagert wird. Das Flurförderzeug 10 hat sich dazu innerhalb des Gangs und relativ zu dem induktiven Lademittel 18 bewegt. Zudem wurde der Schubmast 22 zwischen den Radarmen vorgeschoben. Der Vergleich der Fign. 1a und 1b zeigt bereits deutlich, dass das fahrzeugfeste Lademittel 16 sich in beiden Positionen des Fahrzeugs, nämlich in der Position für Hub- und Senkvorgänge aus Fig. 1a und in der Position zum Ein- und Auslagern von Waren in das Regal 14, sich oberhalb des induktiven Lademittels 18 befindet.

Fign. 1c und 1d zeigen das Flurförderzeug 10 in einer zu der ersten Regaleinheit 12 weisenden Seite. Fig. 1c zeigt das Flurförderzeug 10 in einer Position zum Heben und Senken der Palette 20 vor dem ersten Hochregallager 12. Deutlich zu erkennen ist, dass die fahrzeugfeste Ladeeinrichtung 16 sich oberhalb der ortsfesten Ladeeinrichtung 18 befindet. Fig. 1d zeigt das Flurförderzeug 10 mit vorgeschobenem Schubmast 22 beim Ein- oder Auslagern der Palette 20 in der ersten Regaleinheit 12. Wieder wird deutlich, dass sich das fahrzeugfeste Lademittel 16 oberhalb des im Boden verlegten Lademittels 18 befindet.

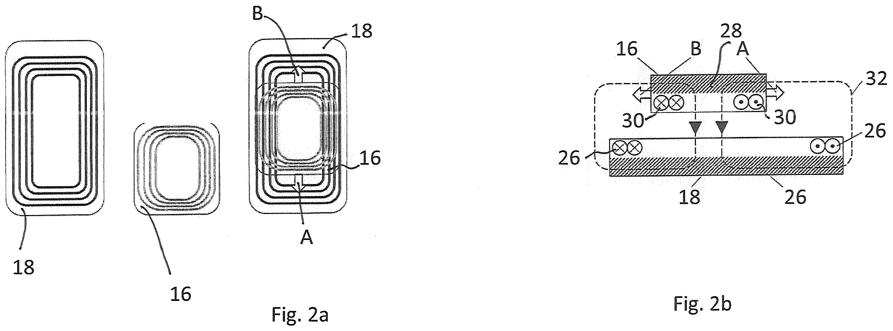

Fig. 2a zeigt in einer schematischen Ansicht, das im Untergrund verlegte Lademittel 18, relativ zu der fahrzeugfest mitgeführten Ladespule 16. In Fig. 2a ist zu erkennen, dass beide Lademittel 16, 18 eine vergleichbare Breite besitzen, sich jedoch in der Längsrichtung unterscheiden. Dies bedeutet, dass das fahrzeugfeste Lademittel 16 sich entlang einem der Pfeile A, B bewegen kann. Die Bewegungsfreiheit in den Richtungen A, B erlaubt es dem Flurförderzeug im Gang zwischen einer Hebe- und Senkenposition sowie einer Ein- und Auslageposition zu wechseln.

Fig. 2b zeigt die schematische Funktionsweise des induktiven Ladevorgangs. Die ortsfest verlegte Ladeeinrichtung 18 besitzt einen schematisch dargestellten magnetischen Kern, der beispielsweise als ein Ferrit-Kern oder dergleichen ausgebildet sein kann. Zudem ist im Schnitt die Spule 26 mit ihrer technischen Stromrichtung dargestellt. Oberhalb des ortsfesten Lademittels befindet sich das fahrzeugfeste Lademittel 16, das ebenfalls mit einem Kernmaterial 28 ausgestattet ist. Auch dieses fahrzeugfeste Lademittel ist im Querschnitt mit seinen Leitungen dargestellt, wobei die technische Stromrichtung eingezeichnet ist. Aufgrund der gleichen Stromrichtung in dem ortsfesten und dem fahrzeugfesten Lademittel bilden sich ringförmige Magnetfeldlinien 32 aus, die per Induktion Leistung von dem ortsfesten Ladegerät zu dem fahrzeugfesten Ladegerät übertragen.

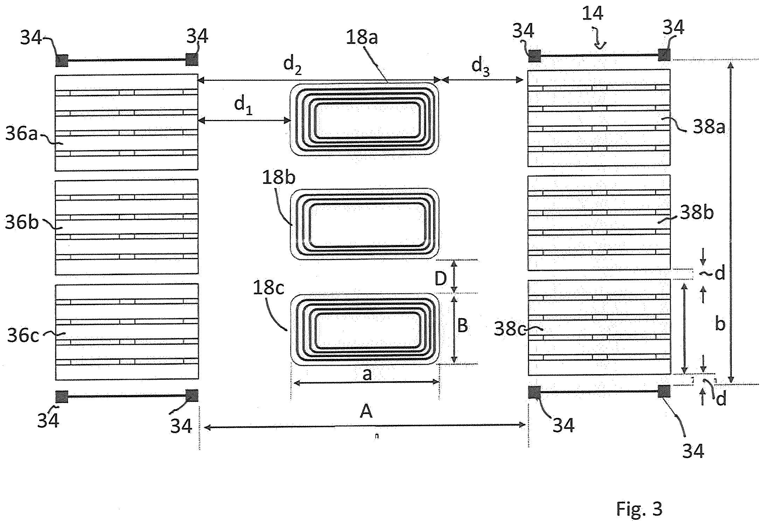

Fig. 3 zeigt in einer schematischen Draufsicht von oben das erste Hochregal 12 und das zweite Hochregal 14. Jedes der Hochregale besitzt vier senkrecht stehende Regalträger 34 in den Ecken. Zwischen den Hochregalen 12, 14 befindet sich der Gang 36 mit drei ortsfesten induktiven Lademitteln 18a, 18b, 18c. In dem Ausführungsbeispiel aus Fig. 3 sind die Lademittel 18 symmetrisch zwischen den Hochregalen 12, 14 angeordnet.

Den drei Lademitteln 18a, 18b, 18c zugeordnet sind in jedem Hochregal 12, 14 jeweils ein Lagerbereich 36a, 36b, 36c bzw. 38a, 38b, 38c. Zwischen den Lagerbereichen ist jeweils ein Abstand d vorgesehen. Der Abstand d liegt auch zwischen den äußeren Lagerbereichen 38a, 38c, 36a, 36c und den Trägern 34 vor. Die Lagerbereiche selbst besitzen eine Breite b, die der Breite B der ortsfesten Lademittel 18a, 18b, 18c entspricht. Die Breite B der ortsfesten Lademittel erstreckt sich in Längsrichtung des Ganges zwischen den Regaleinheiten 12, 14. In Längsrichtung besitzen die ortsfesten Ladeeinheiten einen Abstand D voneinander, der größer als der Abstand d zwischen den Lagerbereichen ist. Der Abstand A, der die Gangbreite bzw. den Querabstand zwischen den Hochregalen 12 und 14 bildet, ist größer als die Erstreckung a der ortsfesten Lademittel in Querrichtung zwischen den Regalen 12, 14.

Bezogen auf das erste Hochregallager ist ein erster Abstand d₁ vorgesehen, der sich zwischen dem Hochregal 12 und der Lagereinheit erstreckt. Auf der von dem ersten Hochregal 12 fortweisenden Seite besitzt die Ladeeinheit 18a einen zweiten Abstand d₂. Bezogen auf das zweite Hochregal 14 besitzt die Ladeeinheit 18a einen dritten Abstand d₃. Es ist leicht einzusehen, dass in dem dargestellten Ausführungsbeispiel mit symmetrisch angeordneten Lademitteln der Abstand d₁ dem Abstand d₃ entspricht. Auch folgt unmittelbar, dass die Summe aus Abstand d₂ und d₃ gerade der Gangbreite A entspricht. Ferner gilt im symmetrischen Fall, dass d₁ + a = d₃ + a = d₂ ist, sich also die kurzen Abstände zu den Regaleinheiten um die Längserstreckung des ortsfesten Lademittels von dem längeren Abstandswert d₂ unterscheiden.

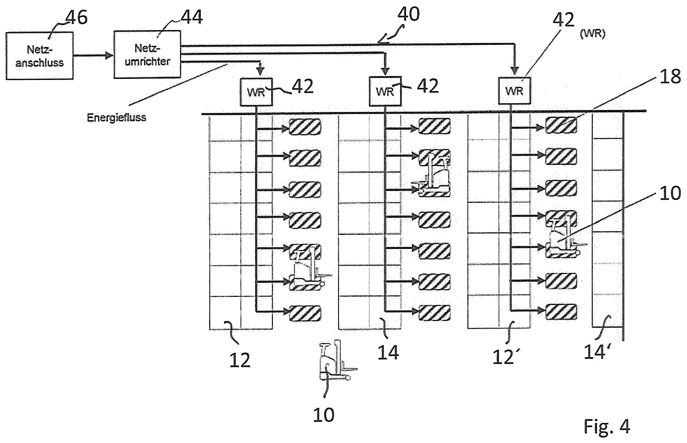

Fig. 4 zeigt ein Hochregallager 40 mit seiner elektrischen Verbindung in einer schematischen Ansicht. Zu erkennen sind verschiedene Flurförderzeuge 10, die zwischen den Hochregalen 12, 14, 12' und 14' Waren transportieren und diese ein- bzw. auslagern. Zwischen den Hochregalen befinden sich stationäre Lademittel 18. Die stationären Lademittel 18 in einem Gang, also in einem Bereich zwischen zwei Hochregallagern werden über einen gemeinsamen Wechselrichter 42 elektrisch versorgt. Die Wechselrichter 42 in dem Lager 40 werden von einem gemeinsamen Netzumrichter 44 gespeist. Der Netzumrichter 44 ist an das elektrische Versorgungsnetz 46 angeschlossen.

In dem erfindungsgemäßen Regallager 40 dauern typische Ein- und Ausstapelvorgänge mit dem Schubmaststapler 10 durchschnittlich zwischen 10 Sekunden und 50 Sekunden, je nach Höhe der ein- oder auszustapelnden Ware und der Erfahrung des Fahrers. Während dieser Zeitspanne ändert der Schubmaststapler seine Position lediglich geringfügig durch ein Vor- und Zurückfahren. Die Veränderung ist dabei weniger als 1 m. Da zudem die Höhe von Hochregallagern gegenwärtig durchschnittlich zunimmt, es werden mehr Waren auf kleinerer Fläche gelagert, nimmt die Zeit, die ein Flurförderzeug fast stationär mit Ein- und Auslagern verbringt, zu. Dies bedeutet aber, dass bei dem erfindungsgemäß ausgestatteten Lager die elektrische Ladezeit des Flurförderzeugs zunimmt. Betrachtet man in einer Beispielrechnung ein Hochregallager, bei dem der Ein- oder Ausstapelvorgang durchschnittlich 30 Sekunden dauert. Bei 100 Ein-/Ausstapelvorgängen pro 8 Stundenschicht ergibt sich eine Zeitspanne von 50 Minuten pro Schicht, die zum Laden des Flurförderzeugs zur Verfügung steht. Erfolgt eine induktive Ladung des Schubmaststaplers mit 10 kW Leistung, bedeutet dies, eine Lademenge von 8,3 kWh pro Schicht. Liegt der typische Energieverbrauch des Schubmaststaplers in einer 8-Stunden-Schicht bei ca. 10 kWh, so können 83,3 % der Energie über das induktive Laden zur Verfügung gestellt werden. Mittels des erfindungsgemäßen induktiven Lademittels kann also statistisch gesehen der überwiegende Teil der für den Betrieb von Flurförderzeugen benötigten Energie während der anfallenden Ein- und Ausstapelvorgänge nachgeladen werden. Standzeiten des Flurförderzeugs am Ladegerät können hierdurch signifikant reduziert werden. Gleiches gilt für die Kapazität der im Flurförderzeug verbauten Batterie, da während des Betriebs des Flurförderzeugs regelmäßig nachgeladen wird.

### Bezugszeichenliste

- 10: Flurförderzeug
- 12: Hochregallager
- 12': Hochregallager
- 14: Hochregallager
- 14': Hochregallager
- 16: induktives Lademittel
- 18: induktives Lademittel
- 18a-c: Lademittel
- 20: Palette
- 22: Schubmast
- 26: Spule
- 28: Ferrit-Material
- 32: Magnetfeldlinien
- 34: Träger
- 36: Gang
- 36a-c: Lagerbereich
- 38a-c: Lagerbereich
- 40: Lager
- 42: Wechselrichter
- 44: Netzumrichter
- 46: Versorgungsnetz

## Patentansprüche

1. Lager mit mindestens einem Flurförderzeug, das ausgebildet ist, um auch während des Betriebs induktiv geladen zu werden, wobei das Flurförderzeug auf seiner Unterseite ein induktives Lademittel (16) besitzt, wobei das Lager weiterhin mindestens eine Regaleinrichtung (12, 14) aufweist, in die mit dem Flurförderzeug (10) Lasten ein- und aus der Lasten ausgelagert werden können, und mit einem entlang der Regaleinrichtung verlaufenden Gang (36), wobei für das in dem Gang (36) befindliche Flurförderzeug (10) ein untergrundfestes induktives Lademittel (18) vorgesehen ist, das an seiner zu der Regaleinrichtung weisenden Seite einen ersten Abstand (d₁) und an seiner von der Regaleinrichtung fortweisenden Seite einen zweiten Abstand (d₂) zu der Regaleinrichtung aufweist, wobei der erste Abstand (d₁) so bemessen ist, dass das Flurförderzeug (10) bei einem Ein- und Auslagervorgang induktiv geladen werden kann und der zweite Abstand (d₂) so bemessen ist, dass das Flurförderzeug (10) auch bei einem Hebe- und Senkvorgang induktiv geladen werden kann.

2. Lager nach Anspruch 1, **dadurch gekennzeichnet, dass** zwei Regaleinrichtungen (12, 14) vorgesehen sind, die einander gegenüberliegend den Gang (36) begrenzen, wobei das induktive Lademittel (18) mit seiner zu der zweiten Regaleinrichtung (14) weisenden Seite einen dritten Abstand (d₃) aufweist, wobei der dritte Abstand (d₃) so bemessen ist, dass das Flurförderzeug (10) bei einem Ein- und Auslagervorgang in die zweite Regaleinrichtung (14) induktiv geladen werden kann und der erste Abstand (d₁) so klein bemessen ist, dass das Flurförderzeug (10) auch bei einem Heben- oder Senkvorgang vor der zweiten Regaleinrichtung (14) induktiv geladen werden kann.

3. Lager nach Anspruch 1 oder 2, **dadurch gekennzeichnet, dass** eine Vielzahl von induktiven Lademitteln (18a, 18b, 18c) entlang dem Gang (36) angeordnet ist.

4. Lager nach einem der Ansprüche 1 bis 3, **dadurch gekennzeichnet, dass** die Vielzahl der induktiven Lademittel (18a, 18b, 18c) von einem Wechselrichter (42) gemeinsam gespeist wird.

5. Lager nach Anspruch 4, **dadurch gekennzeichnet, dass** eines der induktiven Lademittel (16, 18) von dem Wechselrichter (42) zum Laden eines auf dem induktiven Lademittel (18) sich befindenden Flurförderzeugs (10) angesteuert werden kann.

6. Lager nach einem der Ansprüche 1 bis 5, **dadurch gekennzeichnet, dass** mehrere Gänge (36a-c) in dem Lager vorgesehen sind, die jeweils eine Vielzahl von induktiven Lademitteln (18a, 18b, 18c) mit einem Wechselrichter (42) aufweisen.

7. Lager nach Anspruch 6, **dadurch gekennzeichnet, dass** die Wechselrichter (42) der mehreren Gänge (36a-c) von einem gemeinsamen Netzumrichter (44) gespeist werden, der über einen Netzanschluss mit dem elektrischen Versorgungsnetz (46) verbunden ist.

8. Lager nach einem der Ansprüche 1 bis 7, **dadurch gekennzeichnet, dass** in dem Gang (36) das oder die induktiven Lademittel (18) einem Lagerplatz zugeordnet sind.

9. Lager nach Anspruch 8, **dadurch gekennzeichnet, dass** zwischen Lagerplätzen Gangbereiche vorgesehen sind, die frei von induktiven Lademitteln sind.

10. Lager nach einem der Ansprüche 1 bis 9, **dadurch gekennzeichnet, dass** eine übergeordnete Steuerung für die Lagerplätze dazu ausgebildet ist, einen mit einem induktiven Lademittel (18) ausgestatteten Lagerplatz stärker zu frequentieren als einen nicht mit einem induktiven Lademittel ausgebildeten Lagerplatz.

## Claims

1. A store having at least one industrial truck which is designed to also be inductively charged during operation, wherein the industrial truck has an inductive charging means (16) on its underside, wherein the store further has at least one shelf apparatus (12, 14) in and out of which loads can be stored and removed using the industrial truck (10), and having an aisle (36) that extends along the shelf apparatus, wherein an inductive charging means (18) which is fixed to the ground is provided for the industrial truck (10) located in the aisle (36), which inductive charging means is at a first distance (d₁) from the shelf apparatus on its side facing the shelf apparatus and at a second distance (d₂) from the shelf apparatus on its side facing away from the shelf apparatus, wherein the first distance (d₁) is dimensioned such that the industrial truck (10) can be inductively charged during a storage and removal process and the second distance (d₂) is dimensioned such that the industrial truck (10) can also be inductively charged during a raising and lowering process.

2. The store according to claim 1, **characterized in that** two shelf apparatuses (12, 14) are provided which delimit the aisle (36) opposite one another, wherein the inductive charging means (18) is at a third distance (d₃) on its side facing the second shelf apparatus (14), wherein the third distance (d₃) is dimensioned such that the industrial truck (10) can be inductively charged during a storage and removal process in the second shelf apparatus (14) and the first distance (d₁) is so small that the industrial truck (10) can also be inductively charged in front of the second shelf apparatus (14) during a raising or lowering process.

3. The store according to claim 1 or 2, **characterized in that** a plurality of inductive charging means (18a, 18b, 18c) is arranged along the aisle (36).

4. The store according to one of claims 1 to 3, **characterized in that** the plurality of inductive charging means (18a, 18b, 18c) is powered together by an inverter (42).

5. The store according to claim 4, **characterized in that** one of the inductive charging means (16, 18) can be actuated by the inverter (42) in order to charge an industrial truck (10) located on the inductive charging means (18).

6. The store according to one of claims 1 to 5, **characterized in that** multiple aisles (36-c) which each have a plurality of inductive charging means (18a, 18b, 18c) with an inverter (42) are provided in the store.

7. The store according to claim 6, **characterized in that** the inverters (42) of the multiple aisles (36a-c) are powered by a common grid converter (44) that is connected via a grid connection to the electrical supply grid (46).

8. The store according to one of claims 1 to 7, **characterized in that** the one or more inductive charging means (18) are assigned to a storage space in the aisle (36).

9. The store according to claim 8, **characterized in that** aisle regions that are free from inductive charging means are provided between storage spaces.

10. The store according to one of claims 1 to 9, **characterized in that** a higher-level controller for the storage spaces is designed to frequent a storage space equipped with an inductive charging means (18) more often than a storage space without an inductive charging means.

## Revendications

1. Entrepôt pourvu d'au moins un chariot de manutention, lequel est conçu pour être chargé par induction également pendant le fonctionnement, dans lequel le chariot de manutention possède un moyen de charge par induction (16) sur son côté inférieur, dans lequel l'entrepôt présente en outre au moins un rayonnage (12, 14), dans lequel des articles peuvent être stockés et à partir duquel des articles peuvent être déstockés avec le chariot de manutention (10), et pourvu d'un couloir (36) s'étendant le long du rayonnage, dans lequel il est prévu un moyen de charge par induction fixé au sol (18) pour le chariot de manutention (10) situé dans le couloir (36), lequel présente une première distance (d₁) par rapport au rayonnage sur son côté tourné vers le rayonnage et une deuxième distance (d₂) par rapport au rayonnage sur son côté opposé au rayonnage, dans lequel la première distance (d₁) est définie de telle façon que le chariot de manutention (10) peut être chargé par induction lors d'une opération de stockage et déstockage et la deuxième distance (d₂) est définie de telle façon que le chariot de manutention (10) peut être chargé par induction également lors d'une opération de levage et d'abaissement.

2. Entrepôt selon la revendication 1, **caractérisé en ce qu'**il est prévu deux rayonnages (12, 14), lesquels délimitent le couloir (36) l'un en face de l'autre, dans lequel le moyen de charge par induction (18) présente une troisième distance (d₃) avec sont côté tourné vers le deuxième rayonnage (14), dans lequel la troisième distance (d₃) est définie de telle façon que le chariot de manutention (10) peut être chargé par induction lors d'une opération de stockage et déstockage dans le deuxième rayonnage (14) et la première distance (d₁) est définie de manière à être si petite que le chariot de manutention (10) peut être chargé par induction également lors d'une opération de levage ou d'abaissement devant le deuxième rayonnage (14).

3. Entrepôt selon la revendication 1 ou 2, **caractérisé en ce qu'**une pluralité de moyens de charge par induction (18a, 18b, 18c) sont disposés le long du couloir (36).

4. Entrepôt selon l'une des revendications 1 à 3, **caractérisé en ce que** la pluralité de moyens de charge par induction (18a, 18b, 18c) sont alimentés conjointement par un onduleur (42).

5. Entrepôt selon la revendication 4, **caractérisé en ce que** l'un des moyens de charge par induction (16, 18) peut être actionné par l'onduleur (42) pour la charge d'un chariot de manutention (10) se trouvant sur le moyen de charge par induction (18).

6. Entrepôt selon l'une des revendications 1 à 5, **caractérisé en ce qu'**il est prévu plusieurs couloirs (36a-c) dans l'entrepôt, lesquels présentent respectivement une pluralité de moyens de charge par induction (18a, 18b, 18c) avec un onduleur (42).

7. Entrepôt selon la revendication 6, **caractérisé en ce que** les onduleurs (42) de la pluralité de couloirs (36a-c) sont alimentés par un onduleur de réseau commun (44), lequel est relié au réseau d'alimentation électrique (46) par un raccordement au réseau.

8. Entrepôt selon l'une des revendications 1 à 7, **caractérisé en ce que** le ou les moyens de charge par induction (18) sont attribués à un espace d'entreposage dans le couloir (36).

9. Entrepôt selon la revendication 8, **caractérisé en ce que** des zones de couloir exemptes de moyen de charge par induction sont prévues entre des espaces d'entreposage.

10. Entrepôt selon l'une des revendications 1 à 9, **caractérisé en ce qu'**une commande maître destinée aux espaces d'entreposage est conçue pour occuper davantage un espace d'entreposage équipé d'un moyen de charge par induction (18) qu'un espace d'entreposage non conçu avec un moyen de charge par induction.
